# EUROPEAN PATENT SPECIFICATION

(11) **EP 3 071 660 B1**
(45) Date of publication and mention of the grant of the patent: **27.09.2017**
(21) Application number: 14803206.3
(22) Date of filing: 20.11.2014
(51) Int. Cl.: C09D 11/101, C09D 11/30

(54) **PRINTING INK**
DRUCKTINTE
ENCRE D'IMPRESSION

(30) Priority: 20.11.2013 GB 201320515
(43) Date of publication of application: 28.09.2016
(73) Proprietor: Sericol Limited, Broadstairs, Kent CT10 2LE (GB)
(72) Inventor: SEXTON, Lee, Broadstairs Kent CT10 2LE (GB); GOULD, Nigel, Broadstairs Kent CT10 2LE (GB)
(74) Representative: Busher, Samantha Jane
(86) International application number: PCT/GB2014/053437
(87) International publication number: WO 2015/075457

(56) References cited:
- EP-A1- 1 036 831
- EP-A1- 1 614 727
- EP-A1- 2 703 459
- EP-A1- 2 787 046
- WO-A1-2007/036692
- US-A1- 2006 229 412
- US-A1- 2011 109 708
- US-B2- 6 846 851

## Description

The present invention relates to a printing ink and in particular to an inkjet ink for printing onto food packaging.

Inkjet printing is an attractive technique for printing onto a wide-range of substrates on account of its flexibility and ease of use. However, food packaging represents a particular challenge on account of the strict limitations on the properties of materials which come into contact with food, including indirect additives like packaging inks. Specific exclusions include volatile organic solvents and many monomers typically used in inkjet inks based on their odour and/or migration properties.

Thus, the key properties required of such inks are low odour of the cured ink film together with low levels of unreacted materials which may migrate from the ink into the food items. Other desirable properties include high film flexibility and excellent print quality. This combination of properties is difficult to achieve with conventional radiation-curable inkjet inks, where residual odour and high levels of unreacted acrylate materials are often present. A potential solution to this problem is to employ a hybrid water- or solvent-based/radiation-curable ink. The water or solvent reduces the viscosity of the ink and hence allows the formulation of inks based on materials with higher molecular weight and functionality which are more effectively bound into the cured film. Hence residual odour of the cured film and levels of migration from the film are greatly reduced.

Water-based hybrid inks are known in the inkjet industry but many of these radiation-curable inkjet inks suffer from the problem of nozzle blocking, typically as a result of the ink forming an insoluble film within or over the very small nozzles used in inkjet printers. Furthermore, the resultant cured inks can suffer from poor adhesion to the substrate and low water- and/or solvent-resistance.

US 6,846,851 seeks to address these problems using a radiation-curable humectant to restrict water loss from the composition and to help retain water resolubility. The patent defines radiation-curable humectants as water-soluble monomers, oligomers or polymers having UV curable unsaturated groups. This patent focusses on the combination of acrylate-functional high molecular weight polyurethane dispersions, often referred to as PUDs, with non-ionic water-soluble acrylate monomers. However, the presence of these monomers can reduce the water-resistance of the final cured film and lead to increased migration of unreacted species.

US 2011/109708 relates to an aqueous ink composition comprising (A) a colorant, (B) a polymer including a hydrophobic structural unit, (C) a polymerization initiator, (D) a polymerizable compound including an ethylenically unsaturated bond, and (E) water.

EP 1 036 831 relates to a photocurable ink composition for use in an ink jet recording method wherein an ink composition is brought into contact with a recording medium followed by a photocuring reaction to perform printing. The photocurable ink composition comprises at least a colorant, a urethane oligomer, a monomer having a tri- or higher functional reactive group, a photopolymerization initiator, and an aqueous solvent.

EP 1 614 727 relates to an image forming method comprising the steps of: heating an ink in an in-jet head so as to be not less than 40 °C, and jetting the ink through an ink-jet head nozzle, wherein the ink has a viscosity of 10 to 500 mPa·s at 30°C, and has a viscosity of 7 to 30 mPa·s after being heated to be not less than 40°C.

WO 2007/036692 relates to a single phase aqueous composition suitable for thermal inkjet printing comprising a mixture of curable materials including at least two curable oligomers; and one or more co-solvents for the curable materials.

US 2006/229412 relates to an energy curable aqueous composition containing: water; an ethylenically unsaturated oligomer; and a resin not containing energy curable functional groups.

EP 2 703 459 relates to a photo-curable ink composition including colorant, water, photo-initiator, UV curable polyurethane dispersions, hydrophobic radiation-curable monomers and water-soluble or water-miscible radiation curable monomers.

EP 2 787 046 relates to a photo-curable ink composition obtained upon mixing a first printing liquid with a second printing liquid. The first printing liquid includes, at least, UV curable polyurethane dispersions and colorant; the second printing liquid includes, at least, hydrophobic radiation-curable monomers, water-soluble or water-miscible radiation curable monomers and photo-initiators.

There is therefore a need in the art for inkjet inks which can be printed directly onto food packaging, which have a low tendency to block nozzles and, when cured, provide prints having good adhesion, water- and solvent-resistance.

Accordingly, the present invention provides an inkjet ink comprising: water; a radiation-curable multifunctional oligomer having a weight-average molecular weight of 800-10,000 and a water solubility of 20 g/L or less at 25°C; a photoinitiator; and a colouring agent; wherein the ink contains less than 10% by weight of any other radiation-curable components, based on the total weight of the ink, wherein the ink has a viscosity of 100 mPas or less at 25°C, and wherein the oligomer is a polyester acrylate.

The ink of the present invention thereby provides an ink suitable for printing onto food packaging, without recourse to radiation-curable humectants, or indeed any other radiation-curable materials.

The ink contains at least one radiation-curable multifunctional oligomer.

Radiation-curable oligomers are generally known in the art. They may be monofunctional or multifunctional, although the present invention employs a multifunctional oligomer. Radiation-curable multifunctional oligomers include at least two functional groups which can undergo polymerisation during the curing process. The functional group is a (meth)acrylate group. More preferably, the only radiation-curable functional groups present in the oligomer are (meth)acrylate groups. The term "radiation-curable" means that the material polymerises and/or crosslinks when exposed to actinic radiation, commonly ultraviolet light, in the presence of a photoinitiator.

The oligomers of the present invention have a weight-average molecular weight of 800-10,000, more preferably 1,000-5,000. The weight-average molecular weight can be measured using gel permeation chromatography using a PEG/PPG standard. Suitable oligomers for use in the present invention comprise a polyester backbone and two or more radiation-curable groups. The polymerisable group is a (meth)acrylate group. In the present invention, the oligomer is a multifunctional polyester acrylate oligomer.

The oligomer preferably has a functionality of 2 to 6. Preferred oligomers for use in the invention have a viscosity of 50 mPas to 20 Pas at 25°C, more preferably 0.5 to 15 Pas at 25°C. Oligomer viscosities can be measured using an ARG2 rheometer manufactured by T.A. Instruments, which uses a 40 mm oblique / 2° steel cone at 25°C with a shear rate of 25 seconds⁻¹.

The oligomer has a water solubility of 20 g/L or less, more preferably 10 g/L or less, more preferably 5 g/L or less and most preferably 1 g/L or less. Water solubilities are measured at 25°C.

The oligomers of the present invention provide the necessary low odour and low migration properties for indirect food packaging applications.

An example of an oligomer suitable for use in the present invention is Laromer PE 55 WN, which has a weight-average molecular weight of 1,782, a water solubility of less than 1 g/L at 25°C and an average functionality of 2.2.

The term "(meth)acrylate" is intended herein to have its standard meaning, i.e. acrylate and/or methacrylate.

The radiation-curable oligomer is preferably present at 30-70% by weight, more preferably 40-60% by weight, based on the total weight of the ink.

A key feature of the ink of the present invention is that it does not contain migrateable components, and the oligomer is designed to fulfil the requirements for both printing properties and properties required in the cured ink film. Accordingly, the ink contains less than 10% by weight of any other radiation-curable components, and preferably the ink contains less than 5% by weight of any other radiation-curable components. The amounts are based on the total weight of the ink.

Non-limiting examples of other radiation-curable components whose presence is to be minimised are mono- and multifunctional monomers, monofunctional oligomers and other multifunctional oligomers, i.e. multifunctional oligomers which do not fulfil the criteria set out herein for the multifunctional oligomer of the present invention.

Examples of monofunctional (meth)acrylate monomers are phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA) and lauryl acrylate. Examples of difunctional (meth)acrylate monomers are hexanediol diacrylate, polyethylene glycol diacrylate (for example tetraethylene glycol diacrylate), dipropylene glycol diacrylate, neopentyl glycol diacrylate, propoxylated neopentyl glycol diacrylate, hexanediol dimethacrylate, triethyleneglycol dimethacrylate, diethyleneglycol dimethacrylate, ethyleneglycol dimethacrylate and 1,4-butanediol dimethacrylate. Examples of tri- or higher functionality (meth)acrylate monomers are trimethylolpropane triacrylate, pentaerythritol triacrylate, tri(propylene glycol) triacrylate, bis(pentaerythritol) hexaacrylate and ethoxylated trimethylolpropane triacrylate.

Other monomers to be minimised are N-vinyl amides and N-(meth)acryloyl amines such as N-vinyl caprolactam (NVC), N-vinyl pyrrolidone (NVP) and N-acryloylmorpholine (ACMO), and α,β-unsaturated ether monomers such as vinyl ethers.

In a particularly preferred embodiment, the oligomer of the present invention is the sole radiation-curable component present in the ink.

The ink may contain a passive (or "inert") resin. Passive resins are resins which do not enter into the curing process, i.e. the resin is free of functional groups which polymerise under the radiation-curing conditions to which the ink is exposed. In other words, the resin is not a radiation-curable material. They can, however, include groups which react in other ways, such as by oxidative drying. The resin may be a thermoplastic or a thermosetting resin, but is preferably a thermoplastic resin. The resin may be selected from epoxy, polyester, vinyl, ketone, nitrocellulose, phenoxy or acrylate resins, or a mixture thereof and is preferably a poly(methyl (meth)acrylate) resin. The resin has a weight-average molecular weight of 1,500-200,000, as determined by GPC with polystyrene standards as previously described hereinabove.

The passive (or "inert") resin, if present, may be included at 10-30% by weight, based on the total weight of the ink. However, a resin is not required to form the cured ink film. Indeed, in a preferred embodiment, the oligomer of the present invention is the sole film-forming component present in the ink. Film-forming components are components capable of providing the required film properties of adhesion and durability, namely providing polymeric materials in the cured film. They can either be curable components or polymeric components.

The ink also contains water as the liquid vehicle for the ink. The water acts as a carrier for the remaining components of the ink. As with known water-based inkjet inks, the water used in the ink of the present invention is evaporated from the printed ink, typically by heating, in order to allow the ink to dry. The water is typically present at 10-70% by weight, more preferably 20-50% by weight, based on the total weight of the ink.

Volatile organic solvents should be avoided, although low levels may be present as impurities in the components of the ink, and such low levels are tolerated. In this regard, the ink preferably contains less than 5% by weight of volatile organic solvents, more preferably less than 3% by weight, and most preferably less than 1% by weight, based on the total weight of the ink.

The ink comprises at least one colouring agent. The colouring agent may be either dissolved or dispersed in the liquid medium of the ink. Preferably the colouring agent is a dispersible pigment, of the types known in the art and commercially available such as under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colorant is preferably present in an amount of 20% by weight or less, preferably 10% by weight or less, more preferably 8% by weight or less and most preferably 2 to 5% by weight. A higher concentration of pigment may be required for white inks, however, for example up to and including 30% by weight, or 25% by weight.

The inks may be in the form of an ink set comprising a cyan ink, a magenta ink, a yellow ink and a black ink (a so-called trichromatic set). The inks in a trichromatic set can be used to produce a wide range of colours and tones. Other inkjet ink sets may also be used, such as CMYK+white.

The inkjet ink exhibits a desirable low viscosity, namely 100 mPas or less, more preferably 50 mPas or less and most preferably 35 mPas or less at 25°C. The viscosity of the ink may be measured using a Brookfield viscometer fitted with a thermostatically controlled cup and spindle arrangement, e.g. a DV1 low-viscosity viscometer.

The ink may cure by free-radical polymerisation, cationic polymerisation or a combination (hybrid) of the two. Preferably it cures by free-radical polymerisation.

To achieve the cure, the ink includes one or more photoinitiators, a free-radical and/or a cationic photoinitiator, as appropriate. Owing to the relatively high water content of the inks of the present invention, the photoinitiator is preferably water soluble, or in the form of an emulsion.

The free-radical photoinitiator can be selected from any of those known in the art. For example, benzophenone, 1-hydroxycyclohexyl phenyl ketone, 1-[4-(2-hydroxyethoxy)-phenyl]-2-hydroxy-2-methyl-1-propane-1-one, 2-benzyl-2-dimethylamino-(4-morpholinophenyl)butan-1-one, isopropyl thioxanthone, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure and Darocur (from Ciba) and Lucerin (from BASF).

In the case of a cationically curable system, any suitable cationic initiator can be used, for example sulfonium or iodonium based systems. Non limiting examples include: Rhodorsil PI 2074 from Rhodia; MC AA, MC BB, MC CC, MC CC PF, MC SD from Siber Hegner; UV9380c from Alfa Chemicals; Uvacure 1590 from UCB Chemicals; and Esacure 1064 from Lamberti spa.

Preferably the photoinitiator is present in an amount of 1 to 20% by weight, preferably 4 to 10% by weight, based on the total weight of the ink.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and identifying tracers.

The ink may be prepared by known methods such as stirring with a high-speed water-cooled stirrer, or milling on a horizontal bead-mill.

The printing is performed by inkjet printing, e.g. on a single-pass inkjet printer or on a multiple-pass inkjet printer, where the ink is deposited in several swathes via a scanning printhead. The inks are exposed to actinic (often UV) radiation to cure the ink. The exposure to actinic radiation may be performed in an inert atmosphere, e.g. using a gas such as nitrogen, in order to assist curing of the ink. The inks are also dried to remove water. Evaporation of the water can occur simply by exposure of the inks to the atmosphere, but the inks may also be heated to accelerate evaporation.

Accordingly, the present invention further provides a method of inkjet printing comprising inkjet printing the inkjet ink as defined herein onto a substrate and then curing and drying the ink. The curing and drying may be in either order. Optionally, prior to evaporating the water/curing the ink, the ink may be partially cured (i.e. "pinning") by exposure to actinic radiation, typically UV, e.g. by LED.

The present invention also provides a cartridge containing the inkjet ink as defined herein. It also provides a printed substrate having the ink as defined herein printed thereon. Suitable substrates are food packaging. Food packaging is typically formed of flexible and rigid plastics (e.g. food-grade polystyrene and PE/PP films or polyethylene terephthalate (PET) containers), paper and board (e.g. corrugated board). However, the inks of the present invention are not limited to food packaging, but also find application where low odour of the final printed film is desirable, for example, printing on corrugated board for in store displays or digital printing of wallpaper.

Any of the sources of actinic radiation may be used for the irradiation of the inkjet ink. A suitable dose would be greater than 200 mJ/cm², more preferably at least 300 mJ/cm² and most preferably at least 500 mJ/cm². The upper limit is less relevant and will be limited only by the commercial factor that more powerful radiation sources increase cost. A typical upper limit would be 5 J/cm². Further details of the printing and curing process are provided in WO 2012/110815.

The printer includes a means for evaporating the water from the ink after application to the substrate. Examples are well known in the art and include dryers, heaters, air knives and combinations thereof.

In one embodiment, the water is removed by heating. Heat may be applied through the substrate and/or from above the substrate, for example by the use of heated plates (resistive heaters, inductive heaters) provided under the substrate or radiant heaters (heater bars, IR lamps, solid state IR) provided above the substrate. In one example, the ink can be jetted onto a preheated substrate that then moves over a heated platen. The apparatus of the invention may comprise one or more heaters.

The invention will now be described with reference to the following examples, which are not intended to be limiting.

### Examples

### Example 1

Inks were prepared by mixing the components in the given amounts at set out in Table 1. Amounts are given as parts by weight percentages based on the total weight of the ink.

**Table 1.**

| **Ingredient** | **Ink 1 (invention)** | **Ink 2 (comparative)** |
|---|---|---|
| Pro-Jet™ APD 1000 Cyan (pigment) | 10.0 | 10.0 |
| Deionised water | 32.7 | 59.1 |
| Laromer PE55W (polyester acrylate oligomer dispersion) | 55.0 | - |
| Ucecoat 7655 (polyurethane resin dispersion) | - | 28.6 |
| Irgacure 2959 (photoinitiator) | 2 | 2.0 |
| Capstone FS-31 (surfactant) | 0.1 | 0.1 |
| Methyl diethanolamine (tertiary amine) | 0.2 | 0.2 |

### Example 2

The inks were drawn down onto 220 micron gloss white PVC (Genothem) using a K 2 applicator bar depositing 12 micron wet film weight. The films were dried in an oven for 3 minutes at 60°C to remove the water. The resolubility of the resultant film was assessed by rubbing the film with a soft cloth soaked in water. Finally the films were UV cured using a conveyorised UV drier fitted with 1 x120 W/cm medium-pressure mercury lamp with a belt speed of 25 m/min. The results are shown in Table 2.

**Table 2.**

| **Test** | **Ink 1 (invention)** | **Ink 2 (comparative)** |
|---|---|---|
| Water re-solubility (before UV cure) | Highly resoluble 1 rub | Not resoluble |
| Solvent rub resistance | 100+ | 100+ |
| Water rub resistance | 100+ | 100+ |
| Adhesion | No film removal | No film removal |

### Example 3

Further inks for the remaining colours in the inkjet ink set were prepared and tested as outlined in Examples 1 and 2 (see Table 3).

**Table 3.**

| **Ingredient/test** | **Ink 3** | **Ink 4** | **Ink 5** |
|---|---|---|---|
| Deionised water | 27.7 | 32.7 | 30.2 |
| Laromer PE55W | 50.0 | 55.0 | 52.5 |
| Irgacure 2959 | 2.0 | 2.0 | 2.0 |
| Capstone FS-31 | 0.1 | 0.1 | 0.1 |
| Methyl diethanolamine | 0.2 | 0.2 | 0.2 |
| Pro jet APD 1000 Magenta | 20.0 | - | - |
| Pro jet APD 1000 Yellow | - | 10.0 | - |
| Pro jet APD 1000 Black | - | - | 15.0 |
| Water after thermal drying | 1 rub | 1 rub | 1 rub |
| IPA double rubs after UV cure | 40 | 100 | 40-50 |
| Water double rubs after UV cure | 60 | 100 | 100 |

## Claims

1. An inkjet ink comprising:
water;
a radiation-curable multifunctional oligomer having a weight-average molecular weight of 800-10,000 and a water solubility of 20 g/L or less at 25°C;
a photoinitiator; and
a colouring agent;
wherein the ink contains less than 10% by weight of any other radiation-curable components, based on the total weight of the ink, wherein the ink has a viscosity of 100 mPas or less at 25°C, and wherein the oligomer is a polyester acrylate.

2. An inkjet ink as claimed in claim 1, wherein the oligomer has a functionality of 2 to 6.

3. An inkjet ink as claimed in claims 1 or 2, wherein the oligomer has a weight-average molecular weight of 1,000-5,000.

4. An inkjet ink as claimed in any preceding claim, wherein the oligomer has a water solubility of 10 g/L or less.

5. An inkjet ink as claimed in any preceding claim, wherein the ink contains less than 5% by weight of any other radiation-curable components, based on the total weight of the ink.

6. An inkjet ink as claimed in claim 5, wherein the oligomer is the sole radiation-curable component present in the ink.

7. An inkjet ink as claimed in any preceding claim, wherein the oligomer is the sole film-forming component present in the ink.

8. An inkjet ink as claimed in any preceding claim, wherein the oligomer is present at 30-70% by weight, based on the total weight of the ink.

9. An inkjet ink as claimed in any preceding claim, wherein the colouring agent is a dispersed pigment.

10. An inkjet ink as claimed in any preceding claim, wherein the ink has a viscosity of less than 25 mPas at 25°C.

11. A cartridge containing the inkjet ink as claimed in any preceding claim.

12. A printed substrate having the ink as claimed in any of claims 1-10 printed thereon.

13. A printed substrate as claimed in claim 12, wherein the substrate is food packaging.

14. A method of inkjet printing comprising inkjet printing the inkjet ink as claimed in any of claims 1-10 onto a substrate and then curing and drying the ink.

15. A method as claimed in claim 14, wherein the substrate is a food packaging.

## Patentansprüche

1. Tintenstrahltinte, umfassend:
Wasser;
ein strahlungshärtbares multifunktionales Oligomer, das ein gewichtsgemitteltes Molekulargewicht von 800-10.000 und eine Wasserlöslichkeit von 20 g/l oder weniger bei 25 °C aufweist;
einen Fotoinitiator; und
einen Farbstoff;
wobei die Tinte weniger als 10 Gew.-% an anderen strahlungshärtbaren Komponenten enthält, basierend auf dem Gesamtgewicht der Tinte, wobei die Tinte eine Viskosität von 100 mPas oder weniger bei 25 °C aufweist und wobei das Oligomer ein Polyesteracrylat ist.

2. Tintenstrahltinte nach Anspruch 1, wobei das Oligomer eine Funktionalität von 2 bis 6 aufweist.

3. Tintenstrahltinte nach Anspruch 1 oder 2, wobei das Oligomer ein gewichtsgemitteltes Molekulargewicht von 1.000-5.000 aufweist.

4. Tintenstrahltinte nach einem vorhergehenden Anspruch, wobei das Oligomer eine Wasserlöslichkeit von 10 g/l oder weniger aufweist.

5. Tintenstrahltinte nach einem vorhergehenden Anspruch, wobei die Tinte weniger als 5 Gew.-% an anderen strahlungshärtbaren Komponenten enthält, basierend auf dem Gesamtgewicht der Tinte.

6. Tintenstrahltinte nach Anspruch 5, wobei das Oligomer die einzige strahlungshärtbare Komponente ist, die in der Tinte vorhanden ist.

7. Tintenstrahltinte nach einem vorhergehenden Anspruch, wobei das Oligomer die einzige filmbildende Komponente ist, die in der Tinte vorhanden ist.

8. Tintenstrahltinte nach einem vorhergehenden Anspruch, wobei das Oligomer als 30-70 Gew.-% vorhanden ist, basierend auf dem Gesamtgewicht der Tinte.

9. Tintenstrahltinte nach einem vorhergehenden Anspruch, wobei der Farbstoff ein dispergiertes Pigment ist.

10. Tintenstrahltinte nach einem vorhergehenden Anspruch, wobei die Tinte eine Viskosität von weniger als 25 mPas bei 25 °C aufweist.

11. Patrone, enthaltend die Tintenstrahltinte nach einem vorhergehenden Anspruch.

12. Bedrucktes Substrat, auf das die Tinte nach einem der Ansprüche 1-10 aufgedruckt ist.

13. Bedrucktes Substrat nach Anspruch 12, wobei das Substrat Lebensmittelverpackung ist.

14. Verfahren zum Tintenstrahldrucken, umfassend das Tintenstrahldrucken der Tintenstrahltinte nach einem der Ansprüche 1-10 auf ein Substrat und dann Härten und Trocknen der Tinte.

15. Verfahren nach Anspruch 14, wobei das Substrat eine Lebensmittelverpackung ist.

## Revendications

1. Encre pour jet d'encre, comprenant :
de l' eau ;
un oligomère multifonctionnel polymérisable par rayonnement au poids moléculaire à moyenne pondérée égal à 800 - 10 000 et une solubilité dans l'eau égale à 20 g/l ou moins à 25°C ;
un photo-initiateur ; et
un agent colorant ;
l'encre contenant moins de 10 % en poids de tout autre composant polymérisable par rayonnement, sur la base du poids total de l'encre, l'encre présentant une viscosité de 100 mPas ou moins à 25°C, et l'oligomère étant un acrylate de polyester.

2. Encre pour jet d'encre selon la revendication 1, l'oligomère présentant une fonctionnalité comprise entre 2 et 6.

3. Encre pour jet d'encre selon la revendication 1 ou 2, l'oligomère présentant un poids moléculaire à moyenne pondérée compris entre 1 000 et 5 000.

4. Encre pour jet d'encre selon une quelconque des revendications précédentes, l'oligomère présentant une solubilité dans l'eau égale à 10 g/l ou moins.

5. Encre pour jet d'encre selon une quelconque des revendications précédentes, l'encre contenant moins de 5 % en poids de tout autre composant polymérisable par rayonnement, sur la base du poids total de l'encre.

6. Encre pour jet d'encre selon la revendication 5, l'oligomère étant le seul composant polymérisable par rayonnement présent dans l'encre.

7. Encre pour jet d'encre selon une quelconque des revendications précédentes, l'oligomère étant le seul composant filmogène présent dans l'encre.

8. Encre pour jet d'encre selon une quelconque des revendications précédentes, l'oligomère étant présent dans la proportion de 30 à 70 % en poids, sur la base du poids total de l'encre.

9. Encre pour jet d'encre selon une quelconque des revendications précédentes, l'agent colorant étant un pigment dispersé.

10. Encre pour jet d'encre selon une quelconque des revendications précédentes, l'encre présentant une viscosité inférieure à 25 mPas à 25°C.

11. Cartouche contenant de l'encre pour jet d'encre selon une quelconque des revendications précédentes

12. Substrat imprimé présentant l'encre selon une quelconque des revendications 1 à 10 imprimée sur celui-ci

13. Substrat imprimé selon la revendication 12, le substrat étant un emballage alimentaire.

14. Méthode d'impression par jet d'encre comprenant l'impression par jet d'encre de l'encre pour jet d'encre selon une quelconque des revendications 1 à 10 sur un substrat, puis la polymérisation et le séchage de l'encre.

15. Méthode selon la revendication 14, le substrat étant un emballage alimentaire.
